(19) Europäisches Patentamt
European Patent Office
Office européen des brevets

(11) **EP 1 902 916 B1**

(12) **EUROPEAN PATENT SPECIFICATION**

(45) Date of publication and mention
of the grant of the patent:
**01.07.2009 Bulletin 2009/27**

(51) Int Cl.:
*B60T 8/1755* (2006.01)  *B62D 6/00* (2006.01)
*B62D 5/00* (2006.01)

(21) Application number: **06121011.8**

(22) Date of filing: **21.09.2006**

(54) **Steering Variable Gear Ratio (VGR) supporting limit handling driving**

Aktive Lenkung mit variabler Lenkübersetzung für Fahrmanöver im Grenzbereich

Direction assistée active avec rapport de direction variable pour la conduite dans des conditions limites

(84) Designated Contracting States:
**DE FR GB**

(43) Date of publication of application:
**26.03.2008 Bulletin 2008/13**

(73) Proprietor: **Ford Global Technologies, LLC**
**Dearborn, MI 48126 (US)**

(72) Inventors:
• **Burgio, Gilberto**
**52080, Aachen (DE)**
• **Miano, Carlo**
**41053 Maranello (DE)**

(74) Representative: **Drömer, Hans-Carsten**
**Ford-Werke Aktiengesellschaft**
**Patentabteilung NH/DRP**
**Henry-Ford-Strasse 1**
**50725 Köln (DE)**

(56) References cited:
**EP-A2- 1 514 765**     **DE-A1- 10 009 921**
**DE-A1-4102005 012 58**     **US-A1- 2003 221 899**

**Description**

The invention relates to an active steering control method for a vehicle having an Active Front Steering (AFS) System, whereby a steering input from the driver of the vehicle is feed to a Controller to generate a Handling supporting VGR active steering angle in accordance with the preamble of claim 1.

The US 2006/0011407 A1 discloses a Power-assisted steering system of a motor vehicle comprising:

a steering handing device for specifying a steering wheel angle as a measure of a desired steering angle for at least one steerable wheel of the motor vehicle,

a steering gear with a pinion, which converts a pinion angle which depends on the steering wheel angle into the steering angle of the at least one steerable wheel of the motor vehicle,

superimposing means for producing an additional angle and for producing the pinion angle from superimposing the additional angle on the steering wheel angle, and

a servo drive with an electronically controllable hydraulic pump for realizing a variable moment support,

the amount flowing through the electronically controllable hydraulic pump being determined as a function of a rotational speed of the pinion angle and controlled by a control signal of a control device of the steering system.

In the US 2006/0041364 a vehicle behaviour control device is described comprising:

a force detecting unit for detecting a tire force acting on each wheel of a vehicle,

a yaw moment computing unit for computing a yaw moment of the vehicle based on the tire force acting on each wheel detected by the force detecting unit, the yaw moment being generated by a driving force transmitted to each wheel,

a cornering power computing unit for computing a cornering power of each wheel on the tire force acting on each wheel detected by the force detection unit, and

a correcting unit for correcting the yaw moment to obtain a corrected yaw moment based on a moment of inertia of the vehicle and the cornering powers.

A method for providing an active front steering for a vehicle is disclosed in US 2006/0058935, said method comprising:

providing a vehicle speed signal of the vehicle,

providing an actual yaw rate signal of the actual yaw rate of the vehicle,

providing a steering command signal indicative of the vehicle operator's desired steering direction,

providing a lateral acceleration signal of the lateral acceleration of the vehicle.

determining a yaw rate command signal based on the steering command signal and the vehicle speed signal,

determining a yaw rate error signal as the difference between the yaw rate command signal and the actual yaw rate signal,

determining a derivative of the yaw rate error signal,

determining an understeer and oversteer condition of the vehicle based on the steering command signal, the actual yaw rate signal, the vehicle speed signal and the lateral acceleration signal,

determining an understeer flag and an oversteer flag based on the understeer and oversteer condition,

determining a vehicle understeer control and a vehicle oversteer control based on the understeer and oversteer flags,

determining a front steering feedback control signal based on the understeer control and the oversteer control, and

combining the front steering feedback control signal and the steering command signal to provide the active front steering.

The EP 1 514 765 A2 relates to a vehicular steering device comprising a unit, which changes a transfer ratio between a steering angle of a steering wheel and a steered angle of a steered wheel, and a steering transmission system which couples a steering member, such that the steering wheel and the steered wheel by the drive of an electric motor. The vehicular steering device shall detect a grip factor of the steered wheel besides conventional vehicle state quantities.

The US 2003/0221899 A1 discloses a method for implementing a vehicle stability enhancement system for a vehicle. A hand wheel angle input is received, which is adjusted in response to a variable steering ratio generated in the vehicle. Said adjusted hand wheel angle input is inputted into a reference model. Said reference model outputs one or more desired vehicle handling aspects.

During limit handling driving commercial vehicles show reduced level of steerability and/or stability, which then causes the driver to give very high steering wheel correction angles (more then 360 deg). This is very difficult to handle even for experienced drivers. Moreover, at low speed, it is necessary to steer a lot (more then 200 deg) for example to direct the vehicle around sharp corners, thus resulting in a uncomfortable feeling for the driver, in particular during parking manoeuvres.

Vehicle control schemes using active steering are well known in the state of the art.

Typical active steering systems, capable of superimposing a steering angle on the driver input, are for example Active Front Steering (AFS) and Steer by Wire (SBW).

Established active steering solutions can be grouped in two set:

- Static VGR

- Yaw rate control

In the Static VGR solution, AFS / SBW steering system is used to vary the gear ratio from Steering Wheel to Road Wheel, mainly with low ratios (more direct steering) at low vehicle speed and higher ratios for higher vehicle speed. This results in a comfort feature which makes the vehicle more agile and responsive at low speed (and in parking manoeuvres) and more directionally stable and smooth at high speed (highway, wide and fast bends).

In the yaw rate control solution, the active steering is used to regulate the yaw rate measured signal to a target generated in function of the driver inputs. The configuration is that of a classical feedback, with generation of a target, error computation and active steering angle function of it. This solution supports the driver in stabilising the vehicle, but can result non-natural to an expert driver who could feel the vehicle not always responding in line to his steering inputs.

It is an object of the invention to propose an active steering control method to improve the high speed vehicle behaviour.

This object is solved by an active steering control method comprising the features of claim 1. Further advantageous embodiments are disclosed in the dependent claims.

In a preferred embodiment advantageously the VGR active steering angle is multiplied by a Stability Factor to generate an active steering control whereby the steering input from the driver is summed to the active steering control such that a total steering angle is obtained.

Favourable in the sense of the invention is that a Stability Indicator is generated by the vehicle body slip angle and side slip velocity in a Stability Indicator Map.

To generate the amplified term Stability Factor it is suitable in the sense of the invention, that the Stability Indicator is fed to a Stability Factor Map so that the Stability Factor is multiplied to the VGR active steering angle.

The Stability Indicator preferably but not necessarily is a function of available measurements such as Yaw rate, lateral acceleration, steering wheel angle and longitudinal velocity.

In accordance with the teaching of the present invention an active steering control method is disclosed, which provides a smooth and stable vehicle steering response at high speed while direct and agile at low speed (Static VGR solution) and on top of this it guarantees direct and agile response in cases when, in limit handling driving, vehicle stability is at risk and fast countersteering is necessary. The driver workload is drastically reduced and the driver finds easier to handle the vehicle.

Steering Variable Gear Ratio (VGR) functionality is advantageously extended, varying the steering ratios in function of not only vehicle speed and driver steering, but using some vehicle Stability Indicator, too.

Within this preferred embodiment, if the vehicle is driving straight or light cornering in the highway, the vehicle Stability Indicator will give the Stable value and the steering ratio will be set to a high enough value to guarantee directional stability. But when the vehicle is driven with high lateral and yawing motions (typically handling driving), the Stability Indicator will grow and the steering ratio will be set to smaller values, resulting in a more direct steering corrections and therefore supporting the driver to direct the vehicle to the right direction or to countersteer.

A preferred embodiment of the present invention is described below with reference to the accompanying drawings showing:

Fig. 1     Overall Control Scheme Block Diagram, and

Fig. 2     A graphic to compute the Stability Indicator.

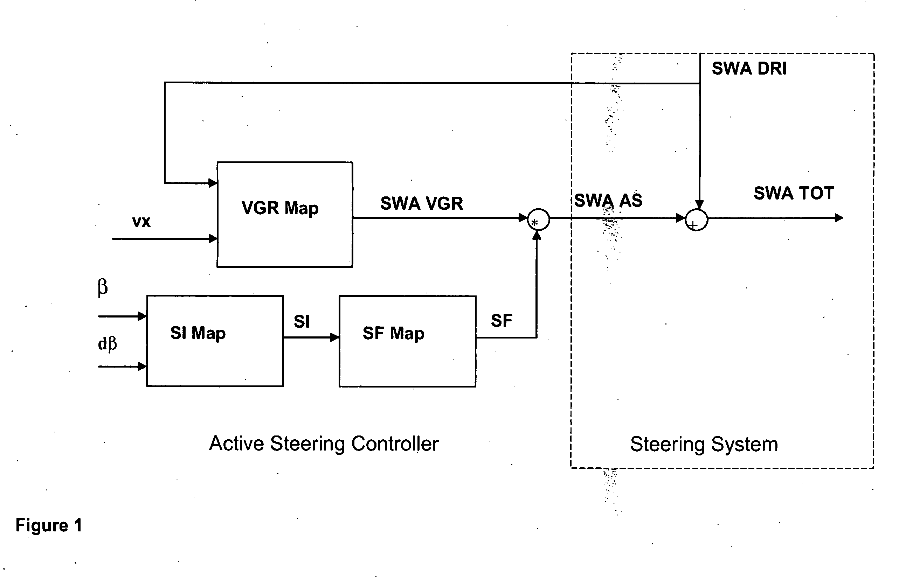

The preferred embodiment of the Invention is described in the control flow diagram in Figure 1.

As shown in Figure 1 a vehicle Body longitudinal velocity signal $v_x$ is fed to a Variable Gear Ratio (VGR) Map (Controller) together with the steering input signal from the driver (SWA DRI) to generate a Handling supporting VGR active steering angle signal (SWA VGR). A vehicle body side slip angle signal $\beta$ and a body side slip velocity signal d$\beta$/dt are fed to a Stability Indicator (SI) Map generating a Stability Indicator signal (SI). The Stability Indicator signal (SI) in the exemplary embodiment is fed to a Stability Factor (SF) Map generating an amplification term Stability Factor signal (SF). The Stability Factor signal (SF) is multiplied to the VGR active steering angle signal (SWA VGR) generating an active steering control signal (SWA AS). Further the steering input signal from the driver (SWA DRI) is summed to the active steering control signal (SWA AS) to obtain a total steering angle signal (SWA TOT).

In detail, on the half left picture side is the control algorithm, on the half right side the abstraction of the active steering system behaviour is shown.

On the right side, the steering input from the driver (SWA DRI) is summed to the active steering controller one (SWA AS) to obtain the total steering angle (SWA TOT), deriving then in rack and road wheel motion.

On the left side, the VGR active steering angle (SWA VGR) is multiplied by the amplification term Stability Factor (SF) function of a Stability Indicator (SI), computed based on vehicle states.

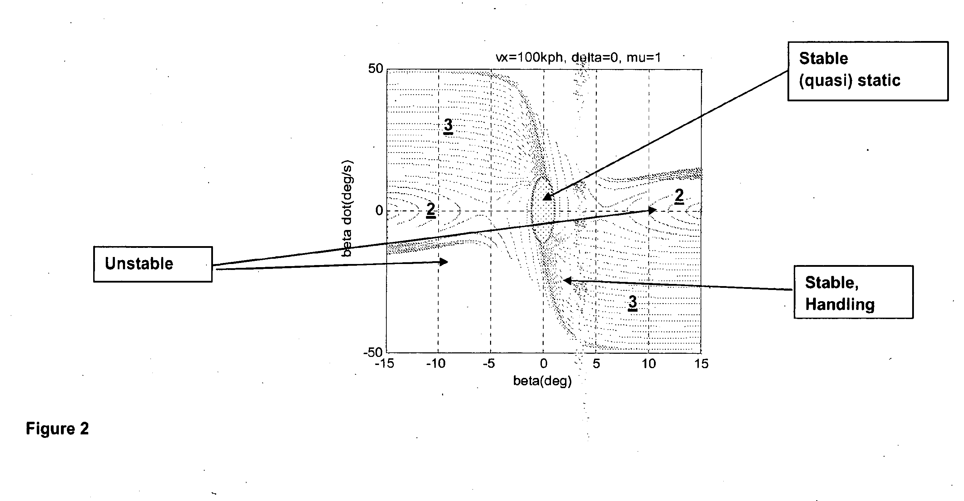

The SI, with values in [0..1], can be computed on phase plane base as indicated in Figure 2. The index reaches its maximum value 1 in the area 2 (unstable), its default value 0 (stable) in a neighbourhood of the origin, typical for smooth and stable driving and smoothly goes from 0 (stable) to 1 (unstable) in the area 3 representing stable handling driving.

SF is a monotonic increasing function of SI, with:

SF(0)=1               default value, VGR steering ratio;

SF(1)=max(SF)≤2    more direct steering ratio.

The SI is in the proposed embodiment expressed in function of the vehicle body side slip angle ($\beta$) and side slip velocity (d$\beta$/dt).

The vehicle body side slip angle signal is not currently available as a direct measurement in commercial vehicles, but can be estimated preferably with standard Kalman filter techniques, from available vehicle signals (Steering Wheel angle, Body Longitudinal Velocity, Body Yaw Rate and Body Lateral Acceleration).

The vehicle side slip velocity is instead easily computed as combination of available measurements:

$$\frac{d\beta}{dt} = \dot{\beta} = \frac{a_y}{v_x} - v_\psi$$

The abbreviation in the term means:

Body longitudinal velocity     $v_x$

Body lateral acceleration     $a_y$

Body yaw rate     $v_\psi$

Body side slip velocity     d$\beta$/dt

Compared with the state of the art in particular with previous solution, the proposed Method advantageously is:

- an extension of static VGR method, which supports the handling driving;

- new compared with yaw control methods, which is better for driver feel and driver controllability, as it will never act against the driver input, but, like VGR, will only change the steering ratio;

- accomplish both the goals of static VGR (static steering corrections) and yaw control methods (dynamic stability corrections).

The solution described is the preferred one modifies the state of the art solution (static VGR) using two easily implementable and tuneable mappings. Some variants are in the following proposed.

More in general, the Handling Supporting VGR functionality is a function of 3 variables, nominally Steering Wheel Angle (SWA), Vehicle Longitudinal Speed ($v_x$), Stability Indicator (SI) and can be implemented with a 3 dimensional function mapping.

One alterative to the proposed SI implementation, which avoids using the estimation of body side slip angle, is mapping the Stability Indicator as a function of available measurements, i.e. Yaw Rate, Lateral Acceleration, Steering Wheel Angle and Longitudinal Velocity.

Any other state space based implementation of the Stability Indicator (i.e. side slip, yaw rate, ...) is in this invention considered equivalent.


**Claims**

1. Active steering control method for a vehicle having an Active Front Steering (AFS) System, whereby a steering input from the driver (SWA DRI) of the vehicle is fed to a Controller to generate a Handling supporting VGR active steering angle (SWA VGR), whereby an active steering control (SWA AS) is generated, and whereby the steering input from the driver (SWA DRI) is summed to the active steering control (SWA AS) such that a total steering angle (SWA TOT) is obtained,

   **characterized in, that**

   the active steering control (SWA AS) is generated by multiplying the VGR active steering angle (SWA VGR) by a Stability Factor (SF), whereby a Stability Indicator (SI) is generated by a vehicle body side slip angle β and side slip velocity (dβ/dt) in a SI-Map, whereby the Stability Indicator (SI) is fed to a Stability Factor (SF) Map generating the amplification term Stability Factor (SF), so that the Stability Factor (SF) is multiplied to the VGR active steering angle (SWA VGR).

2. Active steering control method of claim 1,
   **characterized in, that**
   the Stability Indicator can reach values between a minimum of zero and a maximum of one [0...1].

3. Active steering control method of claim 1 or 2,
   **characterized in, that**
   the Stability Indicator (SI) is a function of available measurements and body side slip estimation of vehicle states.

4. Active steering control method of one of the preceding claims,
   **characterized in, that**
   the Handling supporting VGR functionality is a function at least of steering wheel angle (SWA), vehicle longitudinal speed ($v_x$) and Stability Indicator (SI) and is implementable with a three dimensional function mapping.

5. Active steering control method of one of the preceding claims,
   **characterized in, that**
   the Stability Indicator (SI) is mapped as a function of available measurements, such that the estimation of a body side slip angle is avoidable.


**Patentansprüche**

1. Aktivlenkungssteuerverfahren für ein Fahrzeug mit einem Überlagerungslenkungssystem (AFS-System, AFS - Active Front Steering), wobei eine Lenkeingabe von dem Fahrer (SWA DRI) des Fahrzeugs einer Steuerung zugeführt wird, um einen Handling-Unterstützungs-VGR-Aktivlenkungseinschlag (SWA VGR) zu erzeugen, wodurch eine Aktivlenkungssteuerung (SWA AS) erzeugt wird und wodurch die Lenkeingabe von dem Fahrer (SWA DRI) zu der Aktivlenkungssteuerung (SWA AS) hinzuaddiert wird, so dass ein Gesamtlenkeinschlag (SWA TOT) erhalten wird, **dadurch gekennzeichnet, dass** die Aktivlenkungssteuerung (SWA AS) durch Multiplizieren des VGR-Aktivlenkungseinschlags (SWA VGR) mit einem Stabilitätsfaktor (SF) erzeugt wird, wodurch eine Stabilitätsanzeige (SI) durch einen Schwimmwinkel β des Fahrzeugaufbaus und eine Schwimmgeschwindigkeit (dβ/dt) in einem SI-Kennfeld erzeugt wird, wobei die Stabilitätsanzeige (SI) einem Stabilitätsfaktor-Kennfeld (SF-Kennfeld) zugeführt wird, das den Verstärkung-Term-Stabilitätsfaktor (SF) erzeugt, so dass der Stabilitätsfaktor (SF) mit dem VGR-Aktivlenkungseinschlag (SWA VGR) multipliziert wird.

2. Aktivlenkungssteuerverfahren nach Anspruch 1,
   **dadurch gekennzeichnet, dass**
   die Stabilitätsanzeige Werte zwischen einem Mindestwert von null und einem Höchstwert von eins [0...1] erreichen kann.

3. Aktivlenkungssteuerverfahren nach Anspruch 1 oder 2,
   **dadurch gekennzeichnet, dass**
   die Stabilitätsanzeige (SI) eine Funktion von zur Verfügung stehenden Messungen und Aufbauschwimmschätzung von Fahrzeugzuständen ist.

4. Aktivlenkungssteuerverfahren nach einem der vorhergehenden Ansprüche,
   **dadurch gekennzeichnet, dass**
   die Handling-Unterstützungs-VGR-Funktionalität eine Funktion mindestens des Lenkradeinschlags (SWA), der Fahrzeuglängsgeschwindigkeit ($V_x$) und der Stabilitätsanzeige (SI) ist und mit einer dreidimensionalen Funktionsabbildung implementiert werden kann.

5. Aktivlenkungssteuerverfahren nach einem der vorhergehenden Ansprüche,
   **dadurch gekennzeichnet, dass**
   die Stabilitätsanzeige (SI) als eine Funktion von zur Verfügung stehenden Messungen abgebildet wird, so dass die Schätzung eines Aufbauschwimmwinkels vermieden werden kann.

## Revendications

1. Procédé de commande de direction active pour un véhicule équipé d'un système de direction active (AFS), une entrée de direction provenant du conducteur (SWA DRI) du véhicule étant acheminée à un contrôleur pour générer un angle VGR de direction active (SWA VGR) d'assistance à la manoeuvre, une commande de direction active (SWA AS) étant générée, et l'entrée de direction du conducteur (SWA DRI) étant additionnée à la commande de direction active (SWA AS) de manière à obtenir un angle de direction total (SWA TOT), **caractérisé en ce que** la commande de direction active (SWA AS) est générée en multipliant l'angle VGR de direction active (SWA VGR) par un facteur de stabilité (SF), un indicateur de stabilité (SI) étant généré par un angle de dérapage β de la carrosserie du véhicule et une vélocité de dérapage (dβ/dt) dans un tableau SI, l'indicateur de stabilité (SI) étant acheminé à un tableau de facteur de stabilité (SF) qui génère le terme d'amplification facteur de stabilité (SF) de sorte que le facteur de stabilité (SF) est multiplié par l'angle VGR de direction active (SWA VGR).

2. Procédé de commande de direction active selon la revendication 1, **caractérisé en ce que** l'indicateur de stabilité peut atteindre des valeurs entre un minimum de zéro et un maximum de un [0 ... 1].

3. Procédé de commande de direction active selon la revendication 1 ou 2, **caractérisé en ce que** l'indicateur de stabilité (SI) est une fonction des mesures disponibles et de l'estimation par dérapage de la carrosserie des états du véhicule.

4. Procédé de commande de direction active selon l'une des revendications précédentes, **caractérisé en ce que** la fonctionnalité VGR d'assistance à la manoeuvre est une fonction au moins de l'angle de volant (SWA), de la vitesse longitudinale du véhicule ($v_x$) et de l'indicateur de stabilité (SI) et peut être mise en oeuvre avec un tableau de concordance tridimensionnel de la fonction.

**5.** Procédé de commande de direction active selon l'une des revendications précédentes, **caractérisé en ce que** l'indicateur de stabilité (SI) est mis en concordance en fonction des mesures disponibles de manière à pouvoir éviter l'estimation d'un angle de dérapage de la carrosserie.

Figure 1

EP 1 902 916 B1

Figure 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060011407 A1
- US 20060041364 A
- US 20060058935 A
- EP 1514765 A2
- US 20030221899 A1